**Europäisches Patentamt**

**European Patent Office**

**Office européen des brevets**

(19)

(11) Veröffentlichungsnummer: **0 303 255 B1**

(12) **EUROPÄISCHE PATENTSCHRIFT**

(45) Veröffentlichungstag der Patentschrift :
13.03.91 Patentblatt 91/11

(51) Int. Cl.⁵ : **G01F 1/66**

(21) Anmeldenummer: **88113008.2**

(22) Anmeldetag : **10.08.88**

(54) **Ultraschall-Durchflussmesseinrichtung.**

(30) Priorität : **10.08.87 DE 3726584**

(43) Veröffentlichungstag der Anmeldung :
**15.02.89 Patentblatt 89/07**

(45) Bekanntmachung des Hinweises auf die
Patenterteilung :
**13.03.91 Patentblatt 91/11**

(84) Benannte Vertragsstaaten :
**AT BE CH DE ES FR GB GR IT LI LU NL SE**

(56) Entgegenhaltungen :
**EP-A- 0 040 837
EP-A- 0 223 123
FR-A- 2 568 013
US-A- 3 964 308
US-A- 4 103 551
US-A- 4 555 951**

(73) Patentinhaber : **Siemens Aktiengesellschaft
Wittelsbacherplatz 2
W-8000 München 2 (DE)**

(72) Erfinder : **Tschirner, Peter, Dipl.-Ing.
Kahläckerstrasse 5
W-8500 Nürnberg (DE)**

## Beschreibung

Die Erfindung betrifft eine Ultraschall-Durchflußmeßeinrichtung nach dem Oberbegriff des Patentanspruches 1.

Eine solche aus der FR-A-2 568 013 bekannte Ultraschall-Durchflußmeßeinrichtung dient dazu, den von einem ersten Ultraschallwandler ausgesendeten Ultraschallstrahl durch mehrfache Reflexionen an den Innenwänden des Meßrohres zugeordneten Ultraschallreflektoren nach mehr fachem Durchtritt durch das strömende Medium einem zweiten empfangenden Ultraschallwandler zuzuführen. Die Durchflußgeschwindigkeit des im Meßrohr strömenden Mediums wird im Prinzip dadurch ermittelt, daß die Unterschiede der Laufzeiten der Ultraschallwellen in Strömungsrichtung und entgegengesetzt dazu gemessen werden. Dies geschieht dadurch, daß als Ultraschallwandler kombinierte Sende-Empfangs-Wandler benutzt sind, die wechselweise von Senden auf Empfangen umgeschaltet werden. Aus der Differenz beider Laufzeiten wird die Durchflußgeschwindigkeit im Meßrohr ermittelt.

Der Nachteil dieser bekannten Anordnung besteht vor allem darin, daß die den Ultraschallwandlern gegenüberliegende Meßrohrwand mit einem ultraschallstrahlenreflektierenden Bauelement mit zwei im Winkel gegeneinander gerichteten Reflexionsflächen versehen ist, die den Ultraschallstrahl in der gewünschten Weise ablenken. Durch das in den Innenquerschnitt des Meßrohres hineinragende Bauelement wird die Strömung des flüssigen Mediums verwirbelt, so daß in den Kantenbereichen zwischen der Meßrohrwand und dem reflektierenden Element Zonen geringer Strömung entstehen, in die sich bei Medien, wie sie beispielsweise in der Lebensmittelindustrie vorkommen, Partikel absetzen, die zur Keimbildung führen können, so daß eine solche Meßeinrichtung für diesen Betrieb ungeeignet ist.

Um ein solches zusätzliches ultraschallstrahlenreflektierendes Bauelement zu vermeiden, ist es aus der DE-A-35 39 948 auch bereits bekannt, als Ultraschallwandler in der DE-A-30 20 282 näher beschriebene Interdigitalwandler zu benutzen, die eine schräg zu ihrer Oberfläche liegende Abstrahl- bzw. Empfangsrichtung aufweisen. Bei Verwendung solcher Interdigitalwandler kann die den Wandlern gegenüberliegende Meßrohrwand selbst als Reflektor benutzt werden, so daß sich der zusätzliche Einbau eines Reflexionselementes erübrigt. Der Nachteil der Verwendung von Interdigitalwandlern besteht aber darin, daß diese relativ teuere Bauelemente sind. Außerdem strahlen sie den Ultraschallstrahl im Vergleich zu senkrecht abstrahlenden Ultraschallwandlern mit geringer Energie und großem Streuwinkel ab. Dadurch ist es notwendig, die Innenrohrwände des Meßrohres im Bereich der Reflektoren mit einem den Ultraschallstrahl möglichst verlustfrei reflektierenden Material und die benachbarten Bereiche mit einem ultraschallabsorbierenden Material auszukleiden, um Mehrfachreflexionen durch vagabundierende Ultraschallstrahlen und dadurch hervorgerufene Meßwertfälschungen zu vermeiden.

Aus der DE-A-28 28 937 ist eine Ultraschall-Durchflußmeßeinrichtung bekannt, bei der gerade abstrahlende Ultraschallwandler an gegenüberliegenden Meßrohrwänden des Meßrohres in Strömungsrichtung versetzt schräg zur Meßrohrwand und in Richtung zueinander angeordnet sind. Dabei sind die paarweise einander zugewandten Ultraschallwandler als kombinierte Sende- und Empfangswandler ausgeführt. Die Ultraschallwandler werden alternierend jeweils als Sendewandler und als Empfangswandler betrieben. Dabei werden Ultraschallwellen in und entgegen der Strömungsrichtung und ohne Zwischenschaltung von Reflektoren direkt zum jeweils gegenüberliegenden Ultraschallwandler gesendet. Der sich dabei einstellende Laufzeitunterschied dient als Maß für die Durchflußgeschwindigkeit des im Meßrohr strömenden Mediums. Wegen der zur Oberfläche des Meßrohres schräg angeordneten Ultraschallwandler entstehen Strömungsturbulenzen am Einbauort der Ultraschallwandler entweder dadurch, daß die Wandler einseitig in das Meßrohr und damit in die Strömung hineinragen oder dadurch, daß sie zur Meßrohrwand zurückversetzt angeordnet sind und damit Nischen bilden, die zu der bereits beschriebenen Partikelanlagerung und der damit verbundenen Keimbildung führen. Außerdem müssen für jede Durchstrahlungsstrecke des Ultraschallstrahles durch das Medium zwei umschaltbare Ultraschallwandler vorgesehen werden, was einen erheblichen Aufwand verursacht.

Der Erfindung liegt die Aufgabe zugrunde, eine Ultraschall-Durchflußmeßeinrichtung der vorbeschriebenen Art derart zu gestalten, daß bei Verwendung von senkrecht zur Durchflußrichtung des Mediums strahlenden Ultraschallwandlern die Innenwände des Meßrohres frei sind von die Strömung des Mediums beeinträchtigenden Kanten und Nischen.

Diese Aufgabe wird durch die im Patentanspruch 1 angegebene Erfindung gelöst. Dadurch ist erreicht, daß die Meßeinrichtung auch für den Einsatz in der Lebensmittelindustrie geeignet ist. Die Strömung des Mediums wird an keiner Stelle durch Turbulenzen beeinträchtigt, in deren Bereich sich Nischen befinden, welche eine Ablagerung von keimbildenden Partikeln begünstigen.

Vorteilhafterweise ist die Wandstärke $d_1$ des Meßrohres in den reflektierenden Bereichen so gewählt, daß die Ultraschall-Reflexion gemäß der Formel $d_1 = (2n-1) \cdot \lambda/4$ mit $n = 1, 2, 3..., \lambda$ = Schallwellenlänge in der Gehäusewand, maximal ist. Dadurch wird eine möglichst verlustarme Ultraschallführung gewährleistet.

Es ist vorteilhaft, wenn jeder Ultraschallwandler auf die Außenseite einer Meßrohrwand aufgesetzt ist, so daß der Ultraschall durch die Meßrohrwand gesendet oder empfangen wird und daß die Wandstärke $d_2$ des Meßrohres im Bereich der Ultraschallwandler so gewählt ist, daß die Ultraschall-Durchlässigkeit gemäß der Formel $d_2 = n \cdot \lambda/2$ mit $n = 1, 2, 3...$, $\lambda$ = Schallwellenlänge in der Gehäusewand, maximal ist. Hierdurch wird eine verlustarme Ultraschallein- und -auskopplung durch die Meßrohrwand ermöglicht.

Eine vorteilhafte Weiterbildung besteht darin, daß die Ultraschallwandler jeweils mit einem Edelstahlboden versehen sind, daß in der Meßrohrwand ein Flansch je Ultraschallwandler vorgesehen ist, in den der Ultraschallwandler jeweils formschlüssig zur Innenwand des Meßrohres einschraubbar ist. Damit sind die Ultraschallwandler leicht auswechselbar und durch den Edelstahlboden gegen chemisch aggressive Medien resistent.

Vorteilhafterweise ist auch das Meßrohr aus einem gegen chemisch aggressive Medien resistenten Material hergestellt.

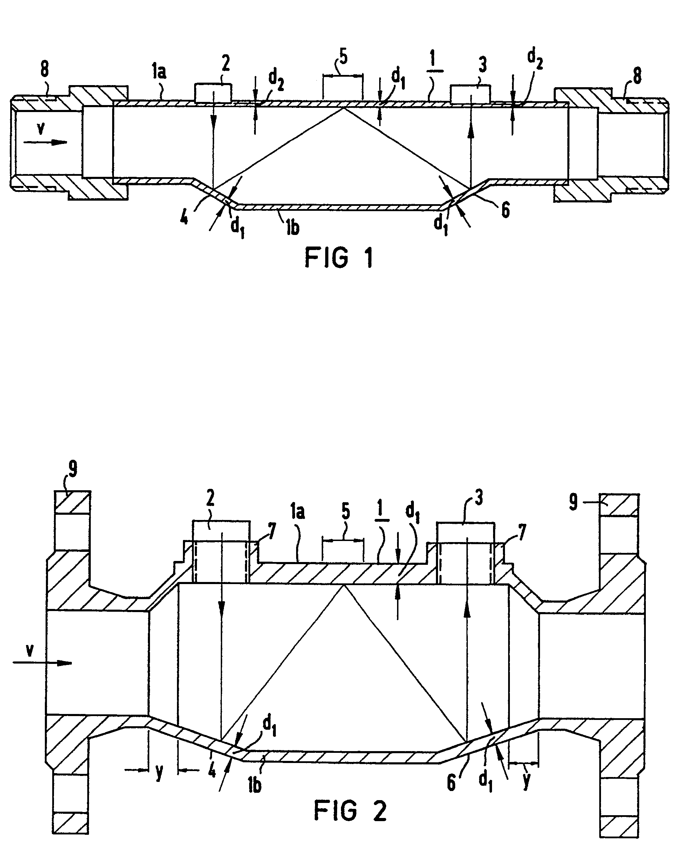

Ausführungsbeispiele der Erfindung werden nachfolgend anhand der FIG 1 und 2 beschrieben. Dabei zeigen :

FIG 1 ein Ultraschallmeßrohr im Längsschnitt, bei dem die Ultraschallwandler auf einer Meßrohrwand angeordnet sind und

FIG 2 ein Ultraschallmeßrohr im Längsschnitt, in dessen einer Meßrohrwand ein Flansch je Ultraschallwandler vorgesehen ist.

Gemäß den FIG 1 und 2 sind die Ultraschallwandler an einer ersten Meßrohrwand 1a des Meßrohres 1 mit im wesentlichen rechteckförmigem Innenquerschnitt in Strömungsrichtung versetzt angeordnet. Der den Ultraschallwandlern 2, 3 direkt gegenüberliegende Bereich der zweiten Meßrohrwand 1b des Meßrohres 1 ist jeweils als Schräge 4, 6 ausgeführt. Außerhalb dieser Bereiche verlaufen die Meßrohrwände 1a, 1b parallel zueinander. Die Ultraschallwandler 2, 3 sind als kombinierte Sende- und Empfangswandler ausgeführt, die eine senkrecht zu ihrer Oberfläche liegende Sende- und Empfangsrichtung haben. Über eine Ansteuerschaltung werden die Ultraschallwandler 2, 3 so angesteuert, daß sich ein alternierender Sende- und Empfangsbetrieb einstellt. Bei entsprechender Ansteuerung sendet ein erster Ultraschallwandler 2, 3 Ultraschall senkrecht zur Strömungsrichtung auf eine erste Schräge 4 bzw. 6 der zweiten Meßrohrwand 1b. Von dort wird der Ultraschall über einen Bereich 5 der ersten Meßrohrwand 1a zwischen den Ultraschallwandlern 2, 3 auf eine zweite Schräge 4 bzw. 6 der zweiten Meßrohrwand 1b reflektiert, die den Ultraschall zu dem Ultraschallwandler 2, 3, der als Empfänger geschaltet ist, reflektiert. Bedingt durch den alternierenden Sende- und Empfangsbetrieb der Ultraschallwandler 2, 3 wird der von den Ultraschallsendern ausgesandte Ultraschall alternierend in und entgegen der Strömungsrichtung v gesendet.

Die daraus resultierenden Laufzeitunterschiede des Ultraschalles können nach der sogenannten Laufzeitdifferenzmessung mit der Phasendifferenzmessung oder als direkte Laufzeitmessung mit dem Sing-around-Verfahren ausgewertet werden. Bei der Laufzeitmessung wird die Frequenz der Ultraschallwandler, die in und entgegen der Strömungsrichtung senden, jeweils so eingestellt, daß die Anzahl der Ultraschall-Wellenlängen entlang der Meßstrecke konstant ist. Beide Verfahren werden ausführlich in der DE-AI-28 28 937 beschrieben.

Um eine möglichst gute Reflexion der Ultraschallwellen an der Innenwand des Meßrohres 1 zu erhalten, ist die Wandstärke $d_1$ des Meßrohres 1 mindestens im Bereich der Reflexion gemäß der Formel $d_1 = (2n-1) \cdot \lambda/4$ mit $n = 1, 2, 3...$, $\lambda$ = Schallwellenlänge in der Gehäusewand, zu wählen.

Dabei sollte gemäß FIG 1 die Wandstärke $d_2$ des Meßrohres im Bereich der Ultraschallwandler 2, 3 gemäß der Formel $d_2 = n \cdot \lambda/2$ mit $n = 1, 2, 3...$, $\lambda$ = Schallwellenlänge in der Gehäusewand, gewählt werden, um damit eine gute Ultraschall-Durchlässigkeit zu erhalten.

Zum Anschluß des Meßrohres 1 an ein bestehendes Rohrleitungssystem, welches das strömende Medium führt, kann gemäß der FIG 1 je ein Anschlußstutzen 8 vorgesehen sein. Dieser Anschlußstutzen 8 ist an der dem Meßrohr zugewandten Seite so ausgeführt, daß ein möglichst strömungsgünstiger Übergang von einem rechteckförmigen Rohrquerschnitt auf einen runden Rohrquerschnitt bzw. umgekehrt ermöglicht wird.

Bei einem Ausführungsbeispiel gemäß FIG 2 ist das Meßrohr an beiden Stirnseiten mit je einem Anschlußflansch 9 verbunden. Der mit y gekennzeichnete Bereich ist ebenfalls so ausgeführt, daß ein Übergang von einem rechteckförmigen Rohrquerschnitt zu einem runden Rohrquerschnitt ermöglicht wird. Mittels des Anschlußflansches 9 kann das Meßrohr an ein Rohrsystem, welches das zu messende Medium führt, angeflanscht werden.

## Ansprüche

1. Ultraschall-Durchflußmeßeinrichtung nach dem Laufzeitverfahren mit einem von einem Medium durchströmten Meßrohr (1) und zwei in Strömungsrichtung des Mediums an der gleichen Meßrohrwand angeordneten, als kombinierte Sende- und Empfangswandler ausgeführten Ultraschallwandlern (2, 3), mit senkrecht zu ihrer Oberfläche gerichteter Sende- und Empfangs-Strahlung, die an einer in Strömungsrichtung (v) geraden Meßrohrwand (1a) des Meßrohres (1) so angeordnet sind, daß das Ultraschallstrahlenbündel des sendenden Ultraschallwandlers senkrecht zur Strömungsrichtung (v) des Mediums in dieses ein-und nach mehrfachem Durchtritt durch das Medium senkrecht zur Strömungsrichtung (v) des Mediums aus diesem austritt und in den empfangenden Ultra- schallwandler eintritt, **dadurch gekennzeichnet**, daß das Meßrohr (1) einen rechteckigen Innenquerschnitt besitzt und die der geraden ersten Meßrohrwand (1a) gegenüberliegende zweite Meßrohrwand (1b) aus drei ebenen, gegeneinander abgewinkelten Flächenteilen gebildet ist, von denen die den beiden Ultraschallwandlern (2, 3) gegenüberliegenden ultraschallreflektierenden Flächenteile (4, 6) in einem solchen spitzen Winkel gegenüber der Strömungsrichtung (v) des Mediums einander zugeneigt schräggestellt und durch ein zur Strömungsrichtung (v) des Mediums paralleles gerades Flächenstück miteinander verbunden sind, daß das auf den einen abgewinkelten Flächenteil (4) der zweiten Meßrohrwand (1b) auftreffende, vom jeweils sendenden Ultraschallwandler (2) ausgehende Ultraschall-Strahlenbündel in Richtung auf die ultraschallreflektierende Innenfläche (5) der ersten Meßrohrwand (1a) zwischen den beiden Ultraschallwandlern (2, 3), von dort auf den zweiten abgewinkelten Flächenteil (6) der zweiten Meßrohrwand (1b) und von diesem in den jeweils empfangenden Ultraschallwandler (3) reflektiert wird und daß die Ultraschallwandler (2, 3) derart an der ersten Meßrohrwand (1a) befestigt sind, daß deren innere Oberfläche im Bereich des aus- bzw. eintretenden Ultraschallstrahlenbündels eben ist.

2. Ultraschall-Durchflußmeßeinrichtung nach Anspruch 1, **dadurch gekennzeichnet**, daß die Wandstärke ($d_1$) des Meßrohres (1) in den reflektierenden Bereichen (4, 5, 6) so gewählt ist, daß die Ultraschall-Reflexion gemäß der Formel $d_1 = (2n-1) \cdot \lambda/4$ mit $n = 1, 2, 3...$, $\lambda$ = Schallwellenlänge in der Gehäusewand, maximal ist.

3. Ultraschall-Durchflußmeßeinrichtung nach Anspruch 1 und 2, **dadurch gekennzeichnet**, daß jeder Ultraschallwandler (2, 3) auf die Außenseite der Meßrohrwande (1a) aufgesetzt ist, so daß der Ultraschall durch die Meßrohrwand (1a) gesendet oder empfangen wird und daß die Wandstärke ($d_2$) des Meßrohres (1) im Bereich der Ultraschallwandler (2, 3) so gewählt ist, daß die Ultraschall-Durchlässigkeit gemäß der Formel $d_2 = n \cdot \lambda/2$ mit $n = 1, 2, 3...$, $\lambda$ = Schallwellenlänge in der Gehäusewand, maximal ist.

4. Ultraschall-Durchflußmeßeinrichtung nach Anspruch 1 und 2, **dadurch gekennzeichnet**, daß die Ultraschallwandler (2, 3) jeweils mit einem Edelstahlboden versehen sind und daß in der Meßrohrwand (1a) ein Flansch (7) je Ultraschallwandler (2, 3) vorgesehen ist, in den der betreffende Ultraschallwandler (2, 3) jeweils formschlüssig zur Innenwand des Meßrohres (1) einschraubbar ist.

5. Ultraschall-Durchflußmeßeinrichtung nach einem der Ansprüche 1 bis 4, **dadurch gekennzeichnet**, daß das Meßrohr (1) aus einem gegen chemisch aggressive Medien resistenten Material hergestellt ist.

## Claims

1. Ultrasonic flow-measuring device using the transit time process, having a measuring tube (1) through which a medium flows, and two ultrasonic transducers (2, 3) arranged in the flow direction of the medium on the same measuring tube wall and constructed as combined transmitting and receiving transducers, with transmitted and received radiation directed perpendicularly to their surface, which are arranged on a straight measuring tube wall (1a), in the flow direction (v), of the measuring tube so that the ultrasonic bundle of rays of the transmitting ultrasonic transducer enters the medium perpendicularly to its flow direction (v) and after repeated passage through the medium leaves it perpendicularly to the flow direction (v) of the medium and enters the receiving ultrasonic transducer, characterised in that the measuring tube (1) has a rectangular internal cross-section and the second measuring tube wall (1b) opposite the straight first measuring tube wall (1a) is formed from three flat surface portions angled with respect to each other, of which the ultrasonic reflecting surface portions (4, 6) opposite the two ultrasonic transducers (2, 3) are inclined towards each other at such an acute angle with respect to the flow direction (v) of the medium, and are joined together by a straight surface portion parallel to the flow direction (v) of the medium, that the ultrasonic bundle of rays hitting the one angled surface portion (4) of the second measuring tube wall (1b), proceeding from the respective transmitting ultrasonic transducer (2), is reflected in the direction of the ultrasonic reflecting inner surface (5) of the first measuring tube wall (1a) between the two ultrasonic transducers (2, 3), from there to the second angled surface portion (6) of the second measuring tube wall (1b) and from this into the respective receiving ultrasonic transducer (3), and in that the ultrasonic transducers (2, 3) are secured on the first measuring tube wall (1a) in such a way that their inner surface is flat in the region of the outgoing or incoming ultrasonic bundle of rays.

2. Ultrasonic flow measuring device according to claim 1, characterised in that the wall thickness ($d_1$) of the measuring tube (1) in the reflecting regions (4, 5, 6) is selected so that the ultrasonic reflection in accordance with the formula $d_1 = (2n-1) \cdot \lambda/4$, with $n = 1, 2, 3....$, $\lambda$ = sound wave length in the housing wall, is a maximum.

3. Ultrasonic flow measuring device according to claim 1 and 2, characterised in that each ultrasonic transducer (2, 3) is placed on the outside of the measuring·tube wall (1a) so that the ultrasound is transmitted or received through the measuring tube wall (1a) and in that the wall thickness ($d_2$) of the measuring tube (1) in the region of the ultrasonic transducers (2, 3) is selected so that the ultrasonic permeability in accordance with the formula $d_2 = n·\lambda/2$, with n = 1, 2, 3...., $\lambda$ = sound wave length in the housing wall, is a maximum.

4. Ultrasonic flow measuring device according to claim 1 and 2, characterised in that the ultrasonic transducers (2, 3) are respectively provided with a stainless steel base and in that in the measuring tube wall (1a) there is provided a flange (7) for each ultrasonic transducer (2, 3) in which the appropriate ultrasonic transducer (2, 3) can be respectively screwed in form-fitting manner to the inner wall of the measuring tube (1).

5. Ultrasonic flow measuring device according to one of claims 1 to 4, characterised in that the measuring tube (1) is made of a material resistant to chemically aggressive media.

## Revendications

1. Débitmètre à ultrasons fonctionnant selon le procédé de mesure du temps de propagation et comportant un tube de mesure (1) parcouru par un fluide, et deux transducteurs à ultrasons (2, 3) disposés sur la même paroi du tube de mesure dans la direction d'écoulement du fluide et agencés sous la forme d'un convertisseur d'émission/réception combiné, et qui émettent et reçoivent un rayonnement perpendiculairement à leur surface et sont disposés sur une paroi (1a), rectiligne dans la direction d'écoulement (v), du tube de mesure (1) de telle sorte que le faisceau d'ultrasons du transducteur à ultrasons réalisant l'émission pénètre dans le fluide, perpendiculairement à la direction d'écoulement (v) de ce fluide et, après avoir traversé à plusieurs reprises le fluide, sort de ce dernier perpendiculairement à la direction d'écoulement (v) du fluide et pénètre dans le transducteur à ultrasons réalisant la réception, caractérisé par le fait que le tube de mesure (1) possède une section transversale intérieure rectangulaire et que la seconde paroi (1b) du tube de mesure, située en vis-à-vis de la première paroi rectiligne (1a) du tube de mesure, est formée de trois éléments de surface plans, inclinés les uns par rapport aux autres et parmi lesquels les éléments de surface (4, 6), qui réfléchissent les ultrasons et sont situés en vis-à-vis des deux transducteurs à ultrasons (1, 3), sont disposés obliquement par rapport à la direction d'écoulement (v) du fluide en étant inclinés l'un vers l'autre et sont reliés entre eux par un élément de surface rectiligne parallèle à la direction d'écoulement (v) du fluide, que le faisceau d'ultrasons qui rencontre un élément de surface incliné (4) de la seconde paroi (1b) du tube de mesure et qui sort du transducteur à ultrasons (2) réalisant respectivement l'émission, est réfléchi en direction de la surface intérieure (5), qui réfléchit les ultrasons, de la première paroi (1a) du tube de mesure entre les deux transducteurs à ultrasons (2, 3), et est réfléchi, par cette surface, vers le second élément de surface incliné (6) de la seconde paroi (1b) du tube de mesure et est réfléchi par cet élément de surface dans le transducteur à ultrasons (3) réalisant respectivement la réception, et que les transducteurs à ultrasons (2, 3) sont fixés à la première paroi (1a) du tube de mesure de telle sorte que leur surface intérieure est plane dans la zone du faisceau d'ultrasons sortant ou du faisceau d'ultrasons entrant.

2. Débitmètre à ultrasons suivant la revendication 1, caractérisé par le fait que l'épaisseur ($d_1$) de la paroi du tube de mesure (1) dans les zones réfléchissantes (4, 5, 6) est choisie de telle sorte que la réflexion des ultrasons conformément à la formule $d_1 = (2n-1)·1/4$ avec n = 1, 2, 3..., et avec 1 = longueur d'onde du son dans la paroi du boîtier, soit maximale.

3. Débitmère à ultrasons suivant les revendications 1 et 2, caractérisé par le fait que chaque transducteur à ultrasons (2, 3) est monté sur la face extérieure de la paroi (1a) du tube de mesure de sorte que les ultrasons sont émis ou reçus par la paroi (1a) du tube de mesure et que l'épaisseur ($d_2$) de la paroi du tube de mesure (2) dans la zone des transducteurs à ultrasons (2, 3) est choisie de manière que la transmissibilité des ultrasons conformément à la formule $d_2 = n·1/2$ avec n = 1, 2, 3..., et avec 1 = longueur d'onde du son dans la paroi du boîtier, soit maximale.

4. Débitmètre à ultrasons suivant les revendications 1 et 2, caractérisé par le fait que les transducteurs à ultrasons (2, 3) sont équipés chacun d'un fond en acier traité et que dans la paroi (1a) du tube de mesure, il est prévu, pour chaque transducteur à ultrasons (2, 3), une bride (7), dans laquelle le transducteur à ultrasons considéré (2, 3) peut être vissé respectivement selon une liaison par formes complémentaires à la paroi intérieure du tube de mesure (1).

5. Débitmètre à ultrasons suivant l'une des revendications 1 à 4, caractérisé par le fait que le tube de mesure (1) est réalisé en un matériau résistant aux fluides corrosif du point de vue chimique.

FIG 1

FIG 2